# EUROPEAN PATENT APPLICATION

(11) **EP 4 475 282 A1**
(43) Date of publication of application: **11.12.2024**
(21) Application number: 23898366.2
(22) Date of filing: 01.12.2023
(51) Int. Cl.: H01M 10/6568, H01M 10/6556, H01M 10/613, H01M 10/653, H01M 50/204

(54) **BATTERY PACK**

(30) Priority: 01.12.2022 KR 20220165828; 07.03.2023 KR 20230029954
(71) Applicant: LG Energy Solution, Ltd., Seoul 07335 (KR)
(72) Inventor: KIM, Min Bum, Daejeon 34122 (KR); JEON, Jong Pil, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019645
(87) International publication number: WO 2024/117843

(57) **Abstract**

According to an embodiment of the present technology, a battery pack may include a housing with a plate part, a battery assembly disposed on an upper surface of the plate part of the housing and including a plurality of battery cells, a cooling device spaced apart from the plate part with plurality the battery assembly interposed therebetween, and a plurality of connecting pillars interposed between the cooling device and the plate part and configured to support the cooling device. The cooling device may include a plurality of upper cooling channels that extend in a first direction parallel to the upper surface of the plate part. The plurality of upper cooling channels may be parallel to the upper surface of the plate part, and may be spaced apart from each other in a second direction perpendicular to the first direction.

## Description

### [Technical Field]

The present invention relates to a battery pack.

The present application claims the benefit of priority based on Korean Patent Application No. 10-2022-0165828, filed on December 1, 2022, and Korean Patent Application No. 10-2023-0029954, filed on March 7, 2023, and the entire contents of the Korean patent applications are incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

As secondary batteries are used for mobility, the demand for the safety of secondary batteries is increasing. A driver's life may be in danger when an accident such as fire occurs in a secondary battery used for mobility and thus research on technology for enhancing the safety of secondary batteries is indispensable. In particular, cooling technology for maintaining temperature of a secondary battery in operation is directly related to the lifespan and performance of the secondary battery as well as the stability of the secondary battery, and thus, many studies are being conducted on cooling technology of secondary batteries.

### [Disclosure]

### [Technical Problem]

The present invention is directed to providing a battery pack with improved safety.

### [Technical Solution]

To address the above problem, example embodiments of the present invention may provide a battery pack. The battery pack may include a housing with a plate part, a battery assembly disposed on an upper surface of the plate part of the housing and including a plurality of battery cells, a cooling device spaced apart from the plate part with the battery assembly interposed therebetween, and a plurality of connecting pillars interposed between the cooling device and the plate part and configured to support the cooling device, wherein the cooling device may include a plurality of upper cooling channels that extend in a first direction parallel to the upper surface of the plate part, wherein the plurality of upper cooling channels may be parallel to the upper surface of the plate part, and wherein the plurality of upper cooling channels may be spaced apart from each other in a second direction perpendicular (or substantially perpendicular) to the first direction.

The battery pack may further include a thermal interface material (TIM) layer interposed between the battery assembly and the cooling device and including a thermal resin.

The TIM layer may be in contact with the cooling device and each of the plurality of battery cells.

The battery assembly may further include a first partition and a second partition spaced apart from each other with the plurality of battery cells interposed therebetween and having shapes complementary to each other, and the plurality of connecting pillars may be in contact with one of the first partition and the second partition.

Each of the plurality of connecting pillars may include a vertical cooling channel connected to the plurality of upper cooling channels.

Each of the upper cooling channels may be directly connected to a corresponding vertical cooling channel of each of the plurality of connecting pillars.

The vertical cooling channel of each of the plurality of connecting pillars may correspond to the upper cooling channels in a one-to-one manner.

The cooling device may further include a splitting channel connected to the vertical cooling channel of each of the plurality of connecting pillars and the upper cooling channels of the cooling device.

The splitting channel may extend in the second direction.

Example embodiments may provide a battery pack. The battery pack may include a housing with a plate part, a plurality of battery assemblies disposed on an upper surface of the plate part of the housing and each including a plurality of battery cells, a cooling device spaced apart from the plate part with the plurality of battery assemblies interposed therebetween, and a plurality of connecting pillars extending in a third direction perpendicular to the upper surface of the plate part and spaced apart from each other with the plurality of battery assemblies interposed therebetween, wherein the plate part of the housing may include a plurality of lower cooling channels that extend in a first direction parallel to the upper surface of the plate part, wherein the plurality of lower cooling channels may be parallel to the upper surface of the plate part, wherein the plurality of lower cooling channels may be spaced apart from each other in a second direction perpendicular to the first direction, and wherein the cooling device may include a plurality of upper cooling channels extending in the first direction and spaced apart from each other in the second direction.

The battery pack may further include a thermal interface material (TIM) layer that is in contact with the cooling device and the plurality of battery cells and includes a thermal resin.

The battery pack may further include a center beam interposed between the plurality of battery assemblies, and the cooling device may overlap the center beam in the third direction.

The cooling device may be spaced apart from the center beam in the second direction.

Each of the plurality of battery assemblies may include a first partition and a second partition spaced apart from each other with the plurality of battery cells interposed therebetween and having shapes complementary to each other, and the plurality of connecting pillars may be in contact with a corresponding partition among the first partition and the second partition.

### [Advantageous Effects]

A battery pack according to example embodiments of the present invention includes a cooling device on battery assemblies. Accordingly, cooling channels are provided above and below the battery assemblies to improve cooling performance of the battery pack.

A plurality of connecting pillars each including a vertical channel connecting a lower cooling channel and an upper cooling channel are on a housing to enhance stability of the battery pack.

Furthermore, the plurality of connecting pillars may horizontally support a partition assembly of the battery assemblies. Accordingly, swelling of a plurality of battery cells of the battery assemblies can be prevented.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 is a plan view for describing a battery pack according to example embodiments.
FIG. 2 is a plan view of some components of a battery pack according to example embodiments.
FIG. 3 is a cross-sectional view taken along line 1A-1A' of FIG. 1.
FIG. 4 is a cross-sectional view taken along line 1B-1B' of FIG. 1.
FIG. 5 is a diagram for describing the flow of a refrigerant in a battery pack according to example embodiments.
FIG. 6 is a plan view for describing a battery pack according to example embodiments.
FIG. 7 is a plan view of some components of a battery pack according to example embodiments.
FIG. 8 is a cross-sectional view taken along line 6A-6A' of FIG. 6.
FIG. 9 is a cross-sectional view taken along line 6B-6B' of FIG. 6.
FIG. 10 is a diagram for describing the flow of a refrigerant in a battery pack according to example embodiments.
FIG. 11 is a plan view for describing a battery pack according to example embodiments.
FIG. 12 is a plan view of some components of a battery pack according to example embodiments.
FIG. 13 is a cross-sectional view taken along line 11A-11A' of FIG. 11.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

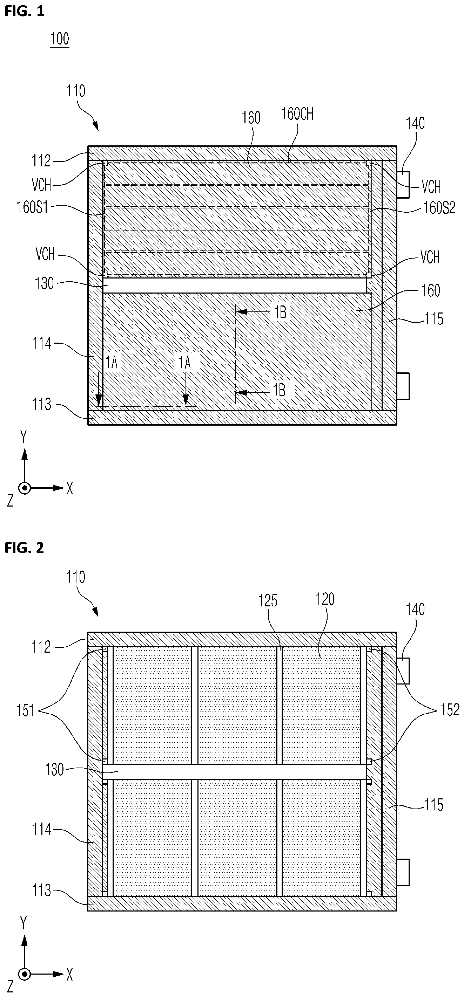

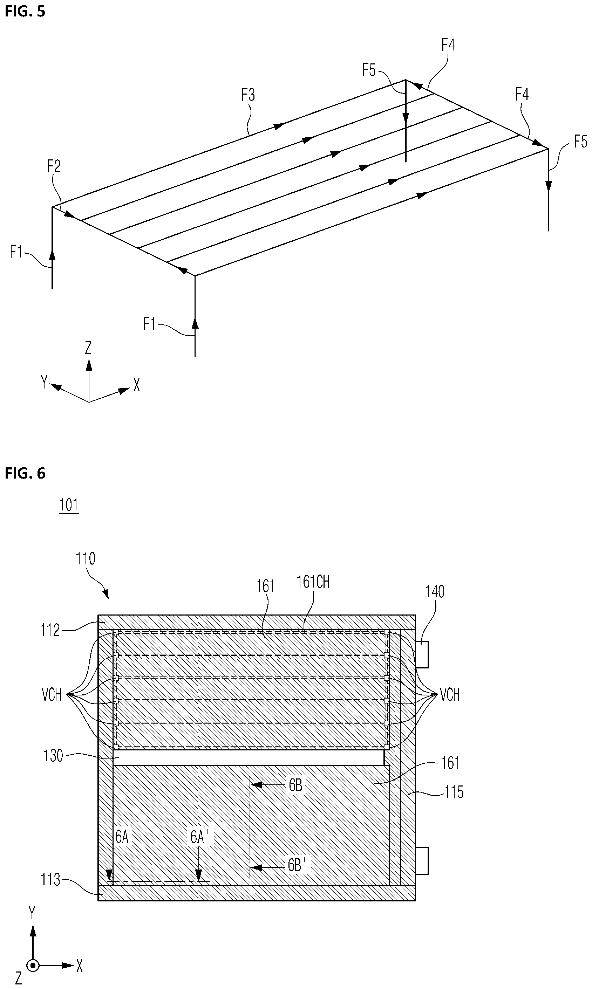

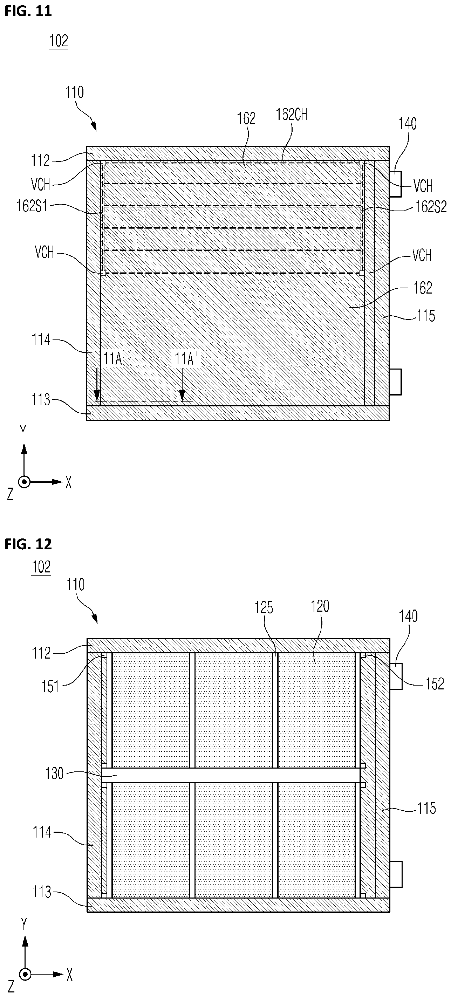

FIG. 1 is a plan view for describing a battery pack 100 according to embodiments. In FIG. 1, elements indicated by broken lines indicate positions of vertical cooling channels VCH, diverging channels 160S1 and 160S2, and upper cooling channels 160CH. In FIG. 1, only one of a plurality of cooling devices 160 is indicated by a broken line but a positional relationship among the vertical cooling channels VCH, the splitting channels 160S1 and 160S2, and the upper cooling channels 160CH may apply to each of the plurality of cooling devices 160 and may also apply to FIGS. 6 and 11.

FIG. 2 is a plan view of some components of the battery pack 100 according to example embodiments. More specifically, in FIG. 2, the plurality of cooling devices 160 of the battery pack 100 of FIG. 1 are omitted.

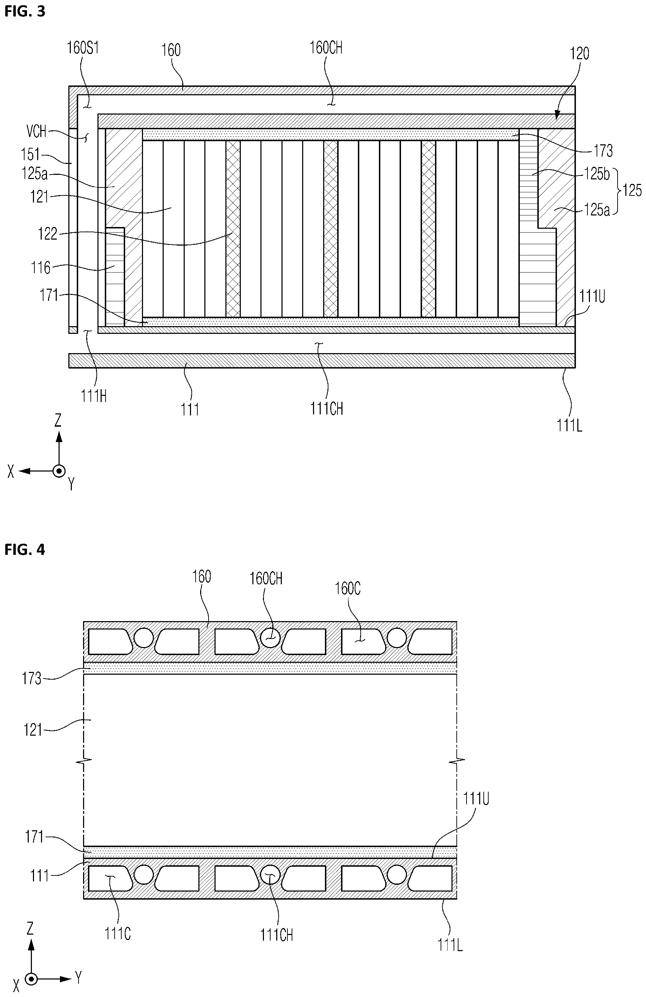

FIG. 3 is a cross-sectional view taken along line 1A-1A' of FIG. 1.

FIG. 4 is a cross-sectional view taken along line 1B-1B' of FIG. 1.

FIG. 5 is a diagram for describing the flow of a refrigerant in the battery pack 100 according to example embodiments.

Referring to FIGS. 1 to 4, the battery pack 100 may include a housing 110, a plurality of battery assemblies 120, a center beam 130, a plurality of exhaust devices 140, a plurality of connecting pillars 151 and 152, the plurality of cooling devices 160, and thermal interface material (TIM) layers 171 and 173. The battery pack 100 is a final form of a battery system mounted on a mobility or the like.

The housing 110 may provide a space in which the plurality of battery assemblies 120 are arranged. The housing 110 may include a plate part 111, a first side wall 112, a second side wall 113, a third side wall 114, and a fourth side wall 115.

The plate part 111 may include an upper side 111U and a lower side 111L that are substantially parallel to each other. Two directions substantially parallel to the upper side 111U of the plate part 111 are defined as an X-axis direction and a Y-axis direction, and a direction substantially perpendicular to the upper side 111U of the plate part 111 is defined as a Z-axis direction. The X-axis direction, the Y-axis direction, and the Z-axis direction may be substantially perpendicular to one another. Unless otherwise mentioned, the definition of directions will apply to the following drawings.

According to example embodiments, the plate part 111 may include a plurality of plates welded together by friction stir welding. When the plate part 111 is provided by friction stir welding, the plate part 111 may include a welded surface that is a boundary surface between different plates. According to example embodiments, the support plate 111 may be configured as a single plate.

The plate part 111 may include a plurality of lower cooling channels 111CH and a plurality of cavities 111C. Each of the plurality of lower cooling channels 111CH and the plurality of cavities 111C may extend in the X-axis direction.

According to example embodiments, the plurality of lower cooling channels 111CH may be configured to provide a path in which a cooling fluid flows. The cooling fluid is a fluid, such as water, air or a refrigerant, for cooling the plurality of battery assemblies 120. The plurality of lower cooling channels 111CH may be spaced apart from each other in the Y-axis direction. The plurality of lower cooling channels 111CH may be arranged in the Y-axis direction. The plurality of lower cooling channels 111CH may be interposed between the plurality of cavities 111C.

The plurality of cavities 111C are empty spaces formed in the plate part 111. By forming the plurality of cavities 111C, the mass of the plate part 111 may be reduced and thus energy density of the battery pack 100 may improve. The plurality of cavities 111C may be spaced apart from each other in the Y-axis direction.

The plurality of battery assemblies 120 may be on the upper surface 111U of the plate part 111 of the housing 110. The plate part 111 may support the plurality of battery assemblies 120. The first to fourth side walls 112, 113, 114, and 115 may horizontally surround the plurality of battery assemblies 120. The first to fourth side walls 112, 113, 114, and 115 may protect the plurality of battery assemblies 120.

The first and second side walls 112 and 113 may be substantially perpendicular to the Y-axis direction. The third and fourth side walls 114 and 115 may be substantially perpendicular to the X-axis direction. Lower sides of the first and second side walls 112 and 113 may be coplanar with the lower side 111L of the plate part 111. The third and fourth side walls 114 and 115 may be on the plate part 111.

Hereinafter, the technical idea of the present invention will be described with reference to an embodiment in which the battery pack 100 is a moduleless type and each of the plurality of battery assemblies 120 does not include a module frame. However, the above description is intended to provide a non-limiting example and thus should not be understood as limiting the technical idea of the present invention in any sense. Those of ordinary skill in the art will be able to easily derive a plurality of battery assemblies including a module frame and a module type battery pack including the same, based on the above description.

Each of the plurality of battery assemblies 120 may include a plurality of battery cells 121, a plurality of separators 122, a first partition 125a, and a second partition 125b. The plurality of battery cells 121 may be connected in series or parallel to each other to form a battery assembly. Each of the plurality of battery assemblies 120 may further include a bus bar plate and an end plate.

The plurality of battery cells 121 are basic units of a lithium ion battery, i.e., a secondary battery. Each of the plurality of battery cells 121 includes an electrode assembly, an electrolyte, and a case. The plurality of battery cells 121 are classified into a lithium ion battery, a lithium ion polymer battery, a lithium polymer battery or the like according to a configuration of the electrode assembly and the electrolyte. A market share of lithium ion polymer batteries in the field of secondary battery is increasing due to a low possibility of leakage of an electrolyte and easiness in manufacturing.

Each of the plurality of battery cells 121 may be one of a cylindrical battery cell, a prismatic battery cell, and a pouch type battery cell. An electrode assembly of the cylindrical battery cell is embedded in a cylindrical metal can. An electrode assembly of the prismatic battery cell is embedded in a prismatic metal can. An electrode assembly of the pouch type battery cell is embedded in a pouch case including an aluminum laminate sheet.

An electrode assembly included in a battery case includes a positive electrode, a negative electrode, and a separator interposed between the positive electrode and the negative electrode. The electrode assembly may be classified as a jelly-roll type electrode assembly or a stack type electrode assembly according to a form of assembly. The jelly roll type electrode assembly is manufactured by winding a positive electrode, a negative electrode, and a separator interposed therebetween. The stack type electrode assembly includes a plurality of positive electrodes, a plurality of negative electrodes, and a plurality of separators interposed therebetween that are stacked sequentially.

According to example embodiments, the plurality of battery cells 121 may be connected in series and/or in parallel. For example, the plurality of battery cells 121 may be connected in series to each other. As another example, the plurality of battery cells 121 may be connected in parallel with each other. As another example, the plurality of battery cells 121 connected in parallel with each other may form groups, and the groups of the plurality of battery cells 121 may be connected in series.

According to example embodiments, the plurality of separators 122 may be compression pads. The plurality of separators 122 horizontally support the plurality of battery cells 121 to prevent swelling of the plurality of battery cells 121.

According to example embodiments, the plurality of separators 122 may be thermal barriers. According to example embodiments, each of the plurality of separators 122 may have a high melting temperature and a low thermal conductivity. According to example embodiments, each of the plurality of separators 122 may include a flame retardant material such as a ceramic and a coated glass material. According to example embodiments, the plurality of separators 122 may be configured to emit a fire retarding material and a fire extinguishing agent when a thermal runaway event occurs.

FIG. 3 illustrates that four battery cells 121 form one group and such groups and the plurality of separators 122 are alternately arranged but is intended to provide an example only and should not be understood as limiting the technical idea of the present invention in any sense. The plurality of battery cells 121 may be divided into an arbitrary number of groups, and the numbers of battery cells 121 included in the respective groups may be different from each other.

The first partition 125a and the second partition 125b of each of the plurality of battery assemblies 120 may be spaced apart from each other with the plurality of battery cells 121 interposed therebetween. The first partition 125a and the second partition 125b may have shapes complementary to each other. According to example embodiments, the second partitions 125b of the plurality of battery assemblies 120 may be coupled to the first partitions 125a of subsequent battery assemblies 120. The second partitions 125b of the plurality of battery assemblies 120 and the first partitions 125a of the subsequent battery assemblies 120 may be coupled to each other by a mechanical coupling means such as a bolt or the like. Accordingly, the second partitions 125b of the plurality of battery assemblies 120 and the first partitions 125a of the subsequent battery assemblies 120 may form a partition assembly 125. The first partition 125a and the second partition 125b of each of the partition assemblies 125 may be engaged with each other.

According to example embodiments, the partition assemblies 125 may extend in a direction (e.g., in the Y-axis direction) perpendicular to the center beam 130. The partition assemblies 125 may isolate the plurality of battery assemblies 120 from each other. The partition assemblies 125 may be in contact with the plate part 111 of the housing and the plurality of cooling devices 160. The partition assemblies 125 may support the plurality of battery cells 121 in the X-axis direction to prevent swelling of the plurality of battery cells 121.

One of the first partition 125a and the second partition 125b of battery assemblies 120 at opposite ends in the X-axis direction may be coupled to a support 116 on the plate part 111 of the housing 110. One of the first partition 125a and the second partition 125b and the support 116 may be fixed by a mechanical coupling means such as a bolt or the like.

The plurality of battery assemblies 120 may be arranged in the X-axis direction and the Y-axis direction. In FIG. 2, the number of battery assemblies 120 arranged in the X-axis direction is three, and the number of battery assemblies 120 arranged in the Y-axis direction is two. Accordingly, the array of the plurality of battery assemblies 120 may be referred to as a 3x2 array. Those of ordinary skill in the art will be able to easily derive a plurality of battery assemblies 120 arranged in an M*N array (here, M and N are each an integer of 2 or more), based on the above description.

The center beam 130 may include elements on the housing 110 from each other. Accordingly, the center beam 130 may prevent an undesired short circuit from occurring between the plurality of battery assemblies 120 while protecting the plurality of battery assemblies 120.

The center beam 130 may be between the third and fourth side walls 114 and 115 that face each other. The center beam 130 may extend in the X-axis direction. The center beam 130 may be in contact with the third side wall 114 and be spaced apart from the fourth side wall 115. The center beam 130 may isolate the plurality of battery assemblies 120 from each other. The center beam 130 may be interposed between the plurality of battery assemblies 120.

The plurality of exhaust devices 140 may be coupled to the fourth side wall 115. The fourth side wall 115 may include a plurality of exhaust holes connected to the plurality of exhaust devices 140. The plurality of exhaust holes may be configured to provide a path in which a gas and heat are discharged from the inside of the battery pack 100.

The plurality of exhaust devices 140 may be configured to delay thermal propagation by discharging a high-temperature gas from the inside of the battery pack 100 to the outside when at least one of the plurality of battery assemblies 120 is in a thermal runway state.

Here, the thermal runaway state of the plurality of battery assemblies 120 is a state in which a change of temperature of the plurality of battery assemblies 120 accelerates the change of temperature, i.e., an uncontrollable positive feedback. The temperature of the plurality of battery assemblies 120 that are in the thermal runaway state sharply increase, and a large amount of high-pressure gas and combustion debris are discharged.

The plurality of cooling devices 160 may be interposed between the plurality of battery assemblies 120. According to example embodiments, each of the plurality of cooling devices 160 may cover some of the plurality of battery assemblies 120. According to example embodiments, each of the plurality of cooling devices 160 may not cover some of the plurality of battery assemblies 120.

According to example embodiments, each of the plurality of cooling devices 160 may not cover the center beam 130. According to example embodiments, each of the plurality of cooling devices 160 may not overlap the center beam 130 in the Z-axis direction. According to example embodiments, each of the plurality of cooling devices 160 may be spaced apart from the center beam 130 in a horizontal direction (e.g., the Y-axis direction).

In the present example, each of the plurality of cooling devices 160 may cover three battery assemblies arranged in the X-axis direction. Accordingly, a part of the plurality of cooling devices 160 are not disposed on the center beam 130 that does not require to be cooled and thus the energy density of the battery pack 100 may improve.

Each of the plurality of cooling devices 160 may include a plurality of upper cooling channels 160CH and a plurality of cavities 160C. Each of the plurality of upper cooling channels 160CH and the plurality of cavities 160C may extend in the X-axis direction.

According to example embodiments, the plurality of upper cooling channels 160CH may provide a path in which a cooling fluid flows. The plurality of upper cooling channels 160CH may be spaced apart from each other in the Y-axis direction. The plurality of upper cooling channels 160CH may be arranged in the Y-axis direction. The plurality of upper cooling channels 160CH may be connected to some of the plurality of lower cooling channels 111CH.

The plurality of cavities 160C are empty spaces formed in each of the plurality of cooling devices 160. By forming the plurality of cavities 160C, the mass of each of the plurality of cooling devices 160 may be reduced and thus energy density of the battery pack 100 may improve. The plurality of cavities 160C may be spaced apart from each other in the Y-axis direction. The plurality of cavities 160C may be arranged in the Y-axis direction.

Each of the plurality of connecting pillars 151 and 152 may be on the plate part 111. Each of the plurality of connecting pillars 151 and 152 may be interposed between the plate part 111 and one of the plurality of cooling devices 160. Each of the plurality of connecting pillars 151 and 152 may extend in the Z-axis direction. The plurality of connecting pillars 151 and 152 may be in contact with one of the first and second partitions 125a and 125b. Accordingly, the plurality of connecting pillars 151 and 152 may horizontally support the first and second partitions 125a and 125b and prevent swelling of the plurality of battery cells 121.

Each of the plurality of connecting pillars 151 and 152 may include a vertical cooling channel VCH. The vertical cooling channel VCH may extend in the Z-axis direction. The vertical cooling channel VCH may be connected to a plurality of lower cooling channels 111CH and a plurality of upper cooling channels 160CH. The plate part 111 may include a vertical cooling channel VCH of each of the plurality of connecting pillars 151 and 152 and a plurality of holes 111H connected to the plurality of lower cooling channels 111CH.

A cooling fluid may flow to the plurality of upper cooling channels 160CH from the plurality of lower cooling channels 111CH through the vertical cooling channel VCH of the plurality of connecting pillars 151. The cooling fluid flowing along the upper cooling channels 160CH may flow to the plurality of lower cooling channels 1 1 1CH through the vertical cooling channel VCH of the plurality of connecting pillars 152.

Each of the plurality of cooling devices 160 may include a splitting channel 160S1 extending in the Y-axis direction. The splitting channel 160S1 may be connected to the vertical cooling channel VCH of each of the plurality of connecting pillars 151 and the plurality of upper cooling channels 160CH. In the present embodiment, some of the lower cooling channels 111CH are connected to a larger number of upper cooling channels 160CH. The splitting channels 160S1 may distribute the cooling fluid transferred through the vertical cooling channel VCH of each of the plurality of connecting pillars 151 to the plurality of upper cooling channels 160CH.

Each of the plurality of cooling devices 160 may include a splitting channel 160S2 extending in the Y-axis direction. The splitting channel 160S2 may be connected to the vertical cooling channel VCH of each of the plurality of connecting pillars 152 and the plurality of upper cooling channels 160CH. The splitting channels 160S2 may transfer the cooling fluid flowing through the upper cooling channels 160CH to the vertical cooling channel VCH of each of the plurality of connecting pillars 152.

The plate part 111 and the plurality of connecting pillars 151 and 152 may be welded together. The plurality of connecting pillars 151 and 152 and the plurality of cooling devices 160 may be welded together. Thus, the vertical cooling channel VCH, the splitting channels 160S1 and 160S2, and the plurality of upper cooling channels 160CH may be liquid sealed to prevent leakage of the cooling fluid.

The TIM layer 171 may be interposed between the plurality of battery cells 121 and the upper surface 111U of the plate part 111. The TIM layer 171 may be in contact with the plurality of battery cells 121 and the plate part 111. The TIM layer 171 may be configured to mediate heat between the battery cells 121 and the plate part 111. The TIM layer 171 may prevent an air layer from being formed between the plurality of battery cells 121 and the plate part 111. The TIM layer 171 may fix the plurality of battery cells 121 and the plate part 111 to each other.

The TIM layer 173 may be interposed between the plurality of battery cells 121 and the plurality of cooling devices 160. The TIM layer 173 may be in contact with the plurality of battery cells 121 and the plurality of cooling devices 160. The TIM layer 173 may be configured to mediate heat between the plurality of battery cells 121 and the plurality of cooling devices 160. The TIM layer 173 may prevent an air layer from being formed between the plurality of battery cells 121 and the plurality of cooling devices 160. The TIM layer 173 may fix the plurality of battery cells 121 and the plurality of cooling devices 160 to each other.

According to example embodiments, each of the TIM layers 171 and 173 may include a thermal resin. According to example embodiments, each of the TIM layers 171 and 173 may include polyurethane or a silicone.

The battery pack 100 may further include electronic components. The electronic components may be on the housing 110. The electronic components may be between the fourth side wall 115 on which the exhaust devices 140 are installed and the plurality of battery assemblies 120. The electronic components may include an electronic device required to drive a battery pack.

The electronic components may include, for example, a battery management system (BMS). The BMS may be configured to monitor, balance, and control the battery pack. Monitoring of the battery pack 100 may include measuring voltages and currents of certain nodes inside the plurality of battery assemblies 120 and measuring temperatures at set positions in the battery pack 100. The battery pack 100 may include measuring instruments for measuring voltages, currents, and temperatures as described above.

Balancing of the battery pack 100 is an operation of reducing a deviation between the plurality of battery assemblies 120. Controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery assemblies 120 from being shortened.

The electronic components may further include a cooling device, a power relay assembly (PRA), a safety plug, etc. The cooling device may include a cooling fan. The cooling fan may circulate air in the battery pack 100 to prevent overheating of each of the plurality of battery assemblies 120. The PRA may be configured to supply or cut off power from a high-voltage battery to an external load (e.g., a motor of a vehicle). The PRA may cut off power supply to an external load (e.g., a motor of a vehicle) to protect the plurality of battery assemblies 120 and an external load (e.g., a motor of a vehicle), when abnormal voltage such as voltage surges occurs.

The battery pack 100 may further include a plurality of bus bars configured to electrically connect the plurality of battery assemblies 120. The plurality of battery assemblies 120 may be connected in series by the plurality of bus bars. Accordingly, the battery pack 100 may be configured to output a high voltage to an external load (e.g., a motor of a vehicle).

Referring to FIGS. 1, 4, and 5, first to fifth flows F1, F2, F3, F4, and F5 represent a movement of a cooling fluid flowing along the upper cooling channels 160CH, the vertical channels VCH, and the splitting channels DCH. The first flow F1 is the flow of the cooling fluid in the Z-axis direction through the vertical channel VCH of the plurality of connecting pillars 151. The second flow F2 is the flow of the cooling fluid in the Y-axis direction through the splitting channel 160S1. The third flow F3 is the flow of the cooling fluid in the X-axis direction through the upper cooling channels 160CH. The fourth flow F4 is the flow of the cooling fluid in the Y-axis direction through the splitting channels 160S2. The fifth flow F5 is the flow of the cooling fluid in the Z-axis direction through the vertical channel VCH of the plurality of connecting pillars 152. The cooling fluid introduced from the lower cooling channels 111CH may flow along the first to fifth flows F1, F2, F3, F4, and F5 and be transferred back to the lower cooling channels 111CH. In addition, it will be understood by those of ordinary skill in the art that the cooling fluid may flow in a direction opposite to a direction of the first to fifth flows F 1, F2, F3, F4, and F5.

### (Second Embodiment)

FIG. 6 is a plan view for describing a battery pack 101 according to example embodiments. In FIG. 6, elements indicated by broken lines indicate positions of vertical cooling channels VCH and upper cooling channels 161CH.

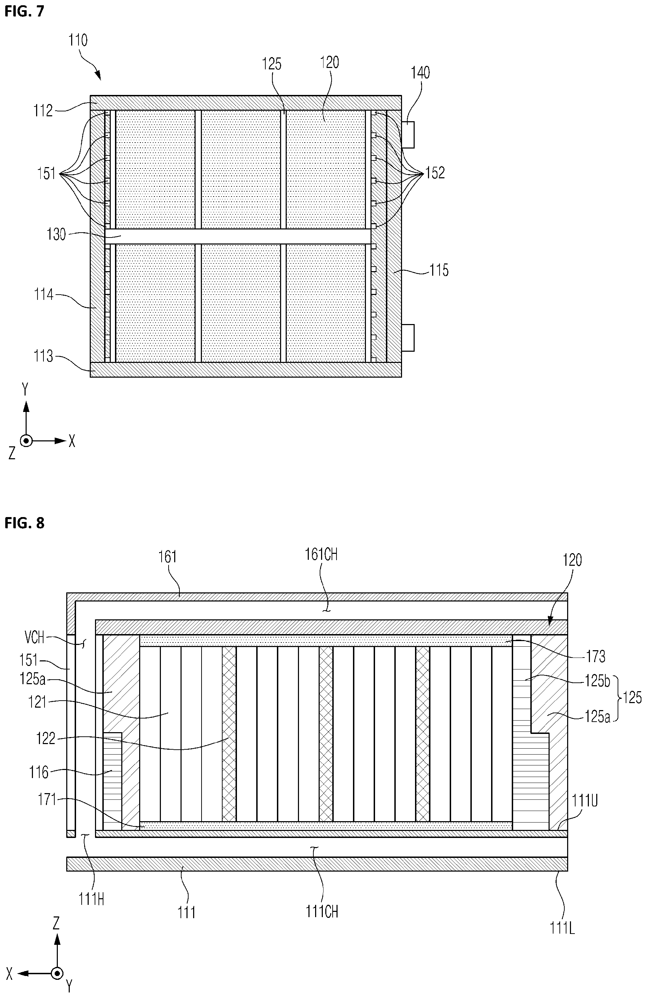

FIG. 7 is a plan view of some components of the battery pack 101 according to example embodiments. More specifically, in FIG. 7, the plurality of cooling devices 161 of the battery pack 101 of FIG. 6 are omitted.

FIG. 8 is a cross-sectional view taken along line 6A-6A' of FIG. 6.

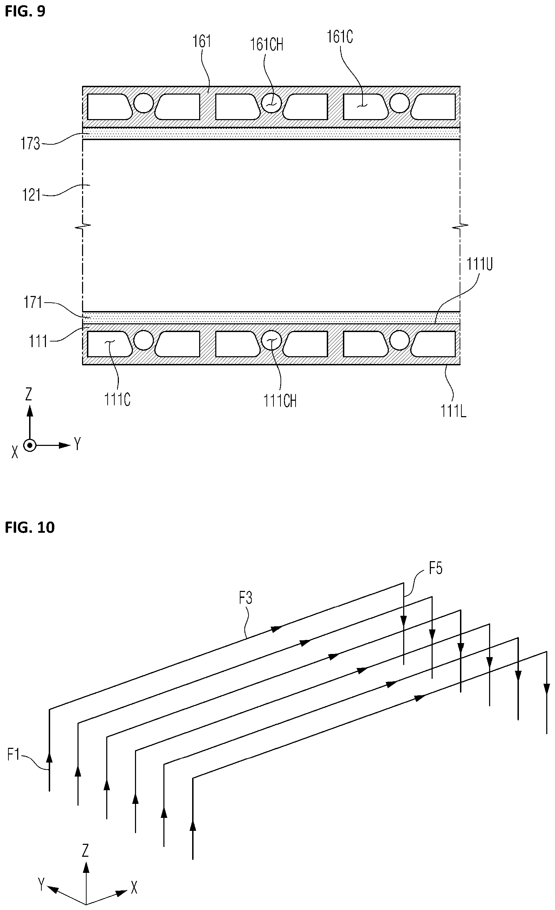

FIG. 9 is a cross-sectional view taken along line 6B-6B' of FIG. 6.

FIG. 10 is a diagram for describing the flow of a refrigerant in the battery pack 101 according to example embodiments.

Referring to FIGS. 6 to 9, the battery pack 101 may include a housing 110, a plurality of battery assemblies 120, a center beam 130, a plurality of exhaust devices 140, a plurality of connecting pillars 151 and 152, a plurality of cooling devices 161, and TIM layers 171 and 173.

The housing 110, the plurality of battery assemblies 120, the center beam 130, the plurality of exhaust devices 140, and the TIM layers 171 and 173 are substantially the same as those described above with reference to FIGS. 1 to 4 and thus a redundant description thereof will be omitted.

The plurality of cooling devices 161 may be on the plurality of battery assemblies 120. According to example embodiments, each of the plurality of cooling devices 161 may cover some of the plurality of battery assemblies 120. According to example embodiments, each of the plurality of cooling devices 161 may not cover some of the plurality of battery assemblies 120.

According to example embodiments, each of the plurality of cooling devices 161 may not cover the center beam 130. According to example embodiments, each of the plurality of cooling devices 161 may not overlap the center beam 130 in the Z-axis direction. According to example embodiments, each of the plurality of cooling devices 161 may be spaced apart from the center beam 130 in a horizontal direction (e.g., the Y-axis direction).

Each of the plurality of cooling devices 161 may include a plurality of upper cooling channels 161CH and a plurality of cavities 161C. Each of the plurality of upper cooling channels 161CH and the plurality of cavities 161C may extend in the X-axis direction.

According to example embodiments, the plurality of upper cooling channels 161CH may provide a path in which a cooling fluid flows. The plurality of upper cooling channels 161CH may be spaced apart from each other in the Y-axis direction. The plurality of upper cooling channels 161CH may be arranged in the Y-axis direction. The plurality of upper cooling channels 161CH may be connected to a plurality of lower cooling channels 111CH. The plurality of upper cooling channels 161CH may be interposed between the plurality of cavities 161C.

The plurality of cavities 161C are empty spaces formed in each of the plurality of cooling devices 161. By forming the plurality of cavities 161C, the mass of each of the plurality of cooling devices 161 may be reduced and thus energy density of the battery pack 101 may improve. The plurality of cavities 161C may be spaced apart from each other in the Y-axis direction.

A cooling fluid may flow to the plurality of upper cooling channels 161CH from the plurality of lower cooling channels 111CH through a vertical cooling channel VCH of a plurality of connecting pillars 151. The cooling fluid flowing along the upper cooling channels 161CH may flow to the plurality of lower cooling channels 111CH through a vertical cooling channel VCH of a plurality of connecting pillars 152.

Each of the plurality of connecting pillars 151 and 152 may be directly connected to a plate part 111 and one of the plurality of cooling devices 161. Accordingly, each of the plurality of cooling devices 161 may include holes connecting the vertical cooling channel VCH of each of the plurality of connecting pillars 151 and 152 and the upper cooling channels 161 CH of the plurality of cooling devices 161.

The vertical cooling channel VCH may correspond to the upper cooling channel 161CH in a one-to-one manner and correspond to the lower cooling channel 111CH in a one-to-one manner. Accordingly, in the case of the battery pack 101, the cooling fluid transferred through the vertical cooling channel VCH may be transferred to the upper cooling channel 161CH without being divided.

According to example embodiments, the battery pack 101 includes connecting pillars 151 and 152, the number of which is greater than the number of the battery pack 100 of FIG. 1 to prevent swelling of a plurality of battery cells 121.

Referring to FIGS. 6, 9, and 10, first, third, and fifth flows F1, F3, and F5 represent a movements of the cooling fluid flowing along the vertical channels VCH and the upper cooling channels 161CH. The first flow F1 is the flow of the cooling fluid in the Z-axis direction through the vertical channel VCH of the plurality of connecting pillars 151. The third flow F3 is the flow of the cooling fluid in the X-axis direction through the upper cooling channels 161CH. The fifth flow F5 is the flow of the cooling fluid in the Z-axis direction through the vertical channel VCH of the plurality of connecting pillars 152.

Compared to the flow of the cooling fluid in the battery pack 100 illustrated in FIG. 5, the flow of the cooling fluid in the battery pack 101 does not include the second and fourth flows F2 and F4, because splitting channels for distributing the cooling fluid are omitted. Accordingly, turbulence of the cooling fluid can be prevented, a reduction of a flow rate of the cooling fluid can be prevented, and efficiency of each of the plurality of cooling devices 161 can be improved. On the other hand, the battery pack 100 of FIG. 1 includes a smaller number of connecting pillars 151 and 152 and thus may have a higher energy density, compared to the battery pack 101 of FIG. 6.

### (Third Embodiment)

FIG. 11 is a plan view for describing a battery pack 102 according to embodiments. In FIG. 11, elements indicated by broken lines indicate positions of vertical cooling channels VCH, splitting channels 16251 and 162S2, and upper cooling channels 162CH.

FIG. 12 is a plan view of some components of the battery pack 102 according to example embodiments. More specifically, in FIG. 12, a plurality of cooling devices 162 of the battery pack 102 of FIG. 11 are omitted.

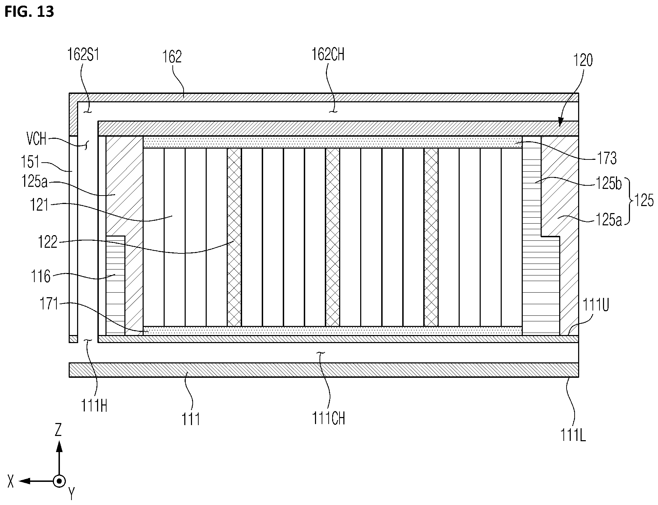

FIG. 13 is a cross-sectional view taken along line 11A-11A' of FIG. 11.

Referring to FIGS. 11 to 13, the battery pack 102 may include a housing 110, a plurality of battery assemblies 120, a center beam 130, a plurality of exhaust devices 140, a plurality of connecting pillars 151 and 152, a cooling device 162, and TIM layers 171 and 173.

The housing 110, the plurality of battery assemblies 120, the center beam 130, the plurality of exhaust devices 140, and the TIM layers 171 and 173 are substantially the same as those described above with reference to FIGS. 1 to 4 and thus a redundant description thereof will be omitted.

The cooling device 162 may be on the plurality of battery assemblies 120. According to example embodiments, the cooling device 162 may cover all the plurality of battery assemblies 120. According to example embodiments, the cooling device 162 may cover the center beam 130. According to example embodiments, the cooling device 162 may overlap the center beam 130 in the Z-axis direction.

The cooling device 162 may include splitting channels 162S1 and 162S2, a plurality of upper cooling channels 162CH, and a plurality of cavities. Each of the plurality of upper cooling channels 162CH and the plurality of cavities may extend in the X-axis direction.

According to example embodiments, the plurality of upper cooling channels 162CH may provide a path in which a cooling fluid flows. The plurality of upper cooling channels 162CH may be spaced apart from each other in the Y-axis direction. The plurality of upper cooling channels 162CH may be arranged in the Y-axis direction. The plurality of upper cooling channels 162CH may be connected to a plurality of lower cooling channels 111CH.

The plurality of cavities are empty spaces formed inside the cooling device 162, and energy density of the battery pack 102 can be enhanced due to the plurality of cavities.

The splitting channel 162S1 may be connected to the vertical cooling channel VCH of each of the plurality of connecting pillars 151 and the plurality of upper cooling channels 162CH. The splitting channel 162S2 may be connected to the vertical cooling channel VCH of each of the plurality of connecting pillars 152 and the plurality of upper cooling channels 162CH.

The cooling fluid may flow to the plurality of upper cooling channels 162CH from the plurality of lower cooling channels 111CH through the vertical cooling channel VCH of the plurality of connecting pillars 151 and the splitting channel 162S1. The cooling fluid flowing along the upper cooling channels 162CH may be transferred to the plurality of lower cooling channels 111CH through the splitting channel 162S2 and the vertical cooling channel VCH of the plurality of connecting pillars 152.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

For example, the embodiments in which two or more battery assemblies are covered and cooled by one cooling device or a plurality of cooling devices have been described above. However, those of ordinary skill in the art will be able to easily derive an embodiment of a battery pack that includes cooling devices, the number of which is equal to the number of battery assemblies and each of which covers a corresponding battery assembly among to the battery assemblies.

## Claims

1. A battery pack comprising:
a housing with a plate part;
a battery assembly on an upper surface of the plate part of the housing and including a plurality of battery cells;
a cooling device spaced apart from the plate part with the battery assembly interposed therebetween; and
a plurality of connecting pillars interposed between the cooling device and the plate part and configured to support the cooling device,
wherein the cooling device includes a plurality of upper cooling channels that extend in a first direction parallel to the upper surface of the plate part,
wherein the plurality of upper cooling channels are parallel to the upper surface of the plate part, and
wherein the plurality of upper cooling channels are spaced apart from each other in a second direction perpendicular to the first direction.

2. The battery pack of claim 1, further comprising a thermal interface material (TIM) layer interposed between the battery assembly and the cooling device and including a thermal resin.

3. The battery pack of claim 2, wherein the TIM layer is in contact with the cooling device and each of the plurality of battery cells.

4. The battery pack of claim 1, wherein the battery assembly further includes a first partition and a second partition spaced apart from each other with the plurality of battery cells interposed therebetween and having shapes complementary to each other, and
wherein the plurality of connecting pillars are in contact with one of the first partition and the second partition.

5. The battery pack of claim 1, wherein each of the plurality of connecting pillars includes a vertical cooling channel connected to the plurality of upper cooling channels.

6. The battery pack of claim 5, wherein each of the plurality of upper cooling channels is directly connected to a corresponding vertical cooling channel of each of the plurality of connecting pillars.

7. The battery pack of claim 6, wherein the vertical cooling channel of each of the plurality of connecting pillars corresponds to the upper cooling channels in a one-to-one manner.

8. The battery pack of claim 5, wherein the cooling device further includes a splitting channel connected to the vertical cooling channel of each of the plurality of connecting pillars and the upper cooling channels of the cooling device.

9. The battery pack of claim 8, wherein the splitting channel extends in the second direction.

10. A battery pack comprising:
a housing with a plate part;
a plurality of battery assemblies on an upper surface of the plate part of the housing and each including a plurality of battery cells;
a cooling device spaced apart from the plate part with the plurality of battery assemblies interposed therebetween; and
a plurality of connecting pillars extending in a third direction perpendicular to the upper surface of the plate part and spaced apart from each other with the plurality of battery assemblies interposed therebetween,
wherein the plate part of the housing includes a plurality of lower cooling channels that extend in a first direction parallel to the upper surface of the plate part,
wherein the plurality of lower cooling channels are parallel to the upper surface of the plate part,
wherein the plurality of lower cooling channels are spaced apart from each other in a second direction perpendicular to the first direction, and
wherein the cooling device includes a plurality of upper cooling channels extending in the first direction and spaced apart from each other in the second direction.

11. The battery pack of claim 10, further comprising a thermal interface material (TIM) layer that is in contact with the cooling device and the plurality of battery cells and includes a thermal resin.

12. The battery pack of claim 11, further comprising a center beam interposed between the plurality of battery assemblies,
wherein the cooling device overlaps the center beam in the third direction.

13. The battery pack of claim 11, further comprising a center beam interposed between the plurality of battery assemblies,
wherein the cooling device is spaced apart from the center beam in the second direction.

14. The battery pack of claim 11, wherein each of the plurality of battery assemblies includes a first partition and a second partition spaced apart from each other with the plurality of battery cells interposed therebetween and having shapes complementary to each other, and
wherein the plurality of connecting pillars are in contact with a corresponding partition among the first partition and the second partition.
